# EUROPEAN PATENT SPECIFICATION

(11) **EP 0 460 298 B1**
(45) Date of publication and mention of the grant of the patent: **14.08.1996**
(21) Application number: 90125228.8
(22) Date of filing: 21.12.1990
(51) Int. Cl.: A01K 63/06

(54) **Electric immersion heater for liquids, particularly for aquariums**
Elektrischer Tauchheizkörper für Flüssigkeiten, insbesondere für Aquarien
Thermoplongeur pour liquides et en particulier pour des aquariums

(30) Priority: 04.06.1990 IT 8557690
(43) Date of publication of application: 11.12.1991
(73) Proprietor: HYDOR S.r.l., I-36061 Bassano del Grappa (VI) (IT)
(72) Inventor: Bresolin, Valerio, I-36020 Pove Del Grappa (Vicenza) (IT)
(74) Representative: Forattini, Amelia

(56) References cited:
- US-A- 4 107 514
- US-A- 4 812 626

## Description

The present invention relates to an electric immersion heater for liquids, particularly for aquariums.

Electric heaters of this type are normally used to provide selected temperatures, inside aquariums, suitable for the life and reproduction of fish and of other marine species. However, it is apparent that said known heaters can also be used to keep at a selected temperature liquids intended for different uses, such as chemical solutions, photographic developing baths, beverages and others.

Known commercially available electric heaters normally have, thermostatic switches which have the function of sensing the temperature variations of the liquid in which they are immersed, in order to control the supply of electric power to a resistive heating element so as to keep the temperature of the liquid as close as possible to the required level. Generally, both the heating element and the thermostatic control devices are enclosed within sealed tubular containers made of heat-resistant and transparent materials so as to dissipate heat by convection and irradiation. The heaters are fixed to the internal walls of the tank of the liquid to be heated by means of suckers or other anchoring means, so that the heating element is completely immersed in said liquid.

In several heaters, the temperature control devises are constituted by thermostatic switches of the bimetallic type, i.e. comprising a frame to which a bimetallic strip is fixed; said strip has, at one end, a movable contact which faces a fixed contact. In order to vary the control temperature, i.e. to set the required temperature, thermostatic switches have elements for adjusting the arrangement of the strip so as to vary the relative distance of the contacts. In use, the contacts are initially connected so as to establish the continuity of the power supply circuit until a higher value of the temperature of the surrounding medium is reached. Due to the temperature increase, and due to the different expansion coefficient of the strip, said strip undergoes such a deformation as to cause the separation of the movable contact from the fixed one. This causes the opening of the power supply circuit and the interruption of the supply of current until a lower temperature value is reached. The opening and closing of the circuit repeat cyclically so as to reach and maintain the actual temperature within a range the average value thereof is the required value.

The initial adjustment of the required temperature level is normally performed by means of a knob or of another actuation means which is arranged outside the container and is associated with an indicator which is used to visualize the selected temperature level. The most common indicators are of the mechanical type with analog operation, for example with a pointer which can move with respect to a fixed scale, with a graduated drum visible through a slot, or with a helical marking visible through a graduated longitudinal slot.

Several electric heaters of this type are known and disclosed for example, by US patents no. 4,072,847, no. 4,107,514, no. 4,149,067, no. 4,255,648 and no. 4,812,626, and by European patent no. 0.022.149; said heaters have thermostatic switches of the above described type, in which the bimetallic strip is rigidly coupled to the frame by the snug-fit insertion of the end which is opposite to the one which bears the movable contact. In order to adjust the distance between the contacts, and therefore to set the required temperature, the switch is provided, proximate to the coupling portion of the strip, with a screw or with a similar presser element which can be actuated from outside and acts on said strip to move the movable contact toward the fixed one.

The preamble of the enclosed claim 1 is based on the disclosure of US-A-4,812,626.

According to a further aspect of these known heaters, the electric heating element is commonly constituted by resistive conductors which are generally helicoidal in shape and emit heat by convection and irradiation. The external temperature of said resistive elements is generally very high, and therefore the container of the heater must be made of appropriate heat-resistant materials, such as glass or quartz. However, in order to avoid the overheating of the walls of the container and their breakage due to sudden temperature variations, for example in the case of a reduction in the level of the liquid due to leaks or evaporation, the conductors are kept at a distance from the wall of said container by means of appropriate spacers, optionally associated with silica or with other interposed materials which also have the function of facilitating the uniform distribution of the heat.

Although these known heating devices are currently in use and solve the task assigned thereto rather satisfactorily, they have some acknowledged disadvantages, such as low precision, limited durability and high cost.

The first of these disadvantages depends on the imprecision and unreliability of bimetallic switches, especially due to the permanent deformations to which the strips are subjected during assembly. Said deformations can in fact irreversibly and uncontrollably alter the elastic properties of the basic material, producing a behavior which can vary from one unit to the next.

It is furthermore observed that a considerable extent of the total length of the strip is intended for snug-fit coupling, and this considerably affects the total cost of the device. As regards the electric heating element, although it is appropriately spaced from the internal wall of the container, in case of sudden lowering of the level of the liquid to be heated due to leaks or evaporation it can produce localized overheating and breakages of the walls of the container, as well as the burning of its own component material. Besides, the space between the heating element and the wall of the container, which indeed tends to reduce the risks of overheating, unavoidably produces a reduction in the thermal efficiency of the apparatus, since heat exchange occurs essentially by irradiation and convection.

Finally, the above mentioned known analog mechanical indicators have a considerable margin of uncertainty, since the readout of the set temperature depends on the visual angle of the user, on the width of the notch and on the graphic precision of the scale.

The aim of the present invention is to obviate the above described disadvantages by providing an electric immersion heater for liquids which has characteristics of high reliability and durability.

A further object of the present invention is to provide an electric heater with thermostatic switch which ensures, besides a relative constructive simplicity, absolute precision in the adjustment and readout of the set temperature.

Another object of the present invention is to provide an electric immersion heater which gives the greatest assurances of resistance and durability of the heating resistive element even in the presence of sudden reductions of the area of contact with the liquid to be heated.

Not least object of the invention is to provide an electric heater starting from materials and components which are commonly commercially available and have a low cost, so as to be advantageous from a merely economical point of view.

This aim, these objects and others which will become apparent hereinafter are achieved by an electric immersion heater for liquids, as disclosed in the appended claims.

Further characteristics and advantages of the invention will become apparent from the description of a preferred but not exclusive embodiment of the heater according to the invention, illustrated only by way of non-limitative example in the accompanying drawings, wherein:

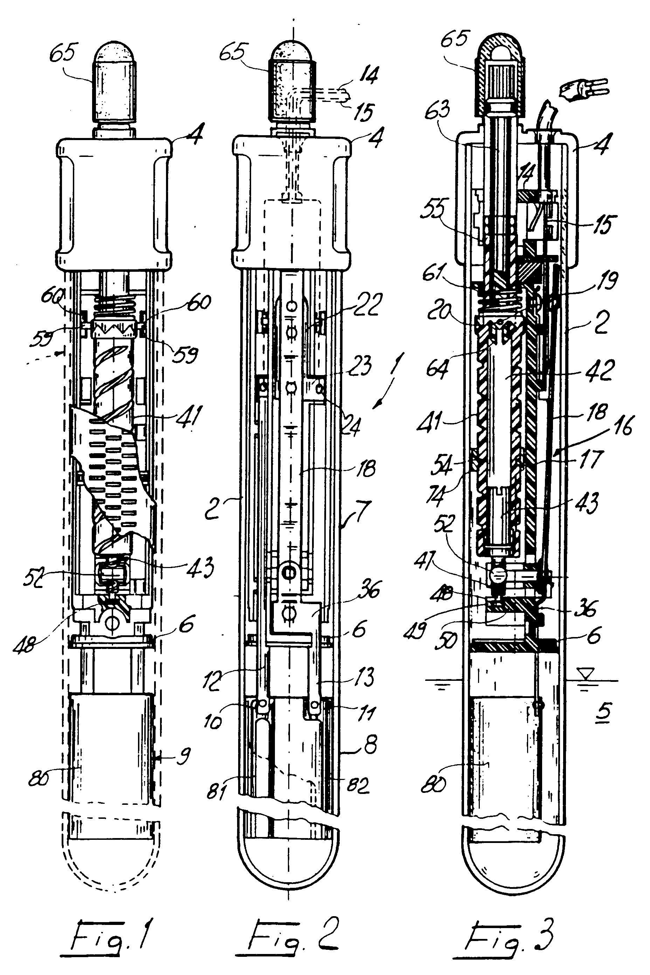

Fig. 1 is a partially sectional front view of an immersion heater according to the invention;
Fig. 2 is a rear view of the heater of Fig. 1;
Fig. 3 is a side section view of the heater of Fig. 2,

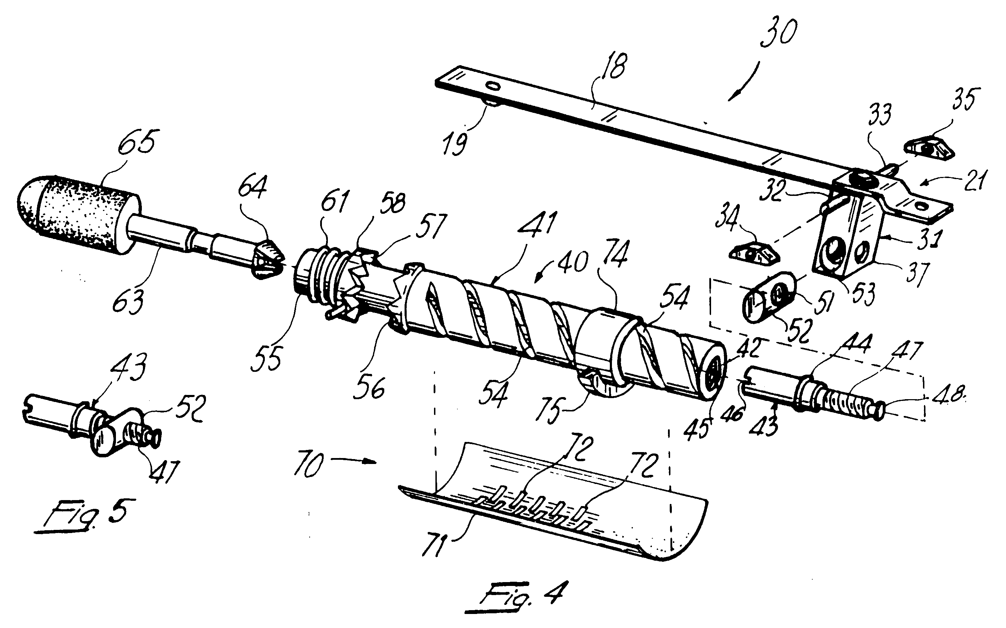

Fig. 4 is an exploded perspective view of the temperature adjustment device according to the invention;
Fig. 5 is a perspective view of a detail of the heater;
Fig. 6 and 7 are diagrams of the operation of the heater according to the invention, as a function of time, in the absence of liquid.

With reference to the above figures, the immersion heater according to the invention, generally indicated by the reference numeral 1, is formed by a tubular container 2 made of glass or of another transparent material which is resistant to high temperatures; said container is open at the upper end and is closed at the lower end by a hemispherical bulb 3. The upper end is closed by a plug 4 which forms a support for suckers or other equivalent anchoring means, not illustrated in the drawings, which are suitable for removably fastening the device to the wall of the tank which contains the liquid 5 to be thermally controlled.

The container is internally divided by a transverse median partition 6 into an upper chamber 7 and a lower chamber 8. A heating element, generally indicated by 9, is accommodated in the lower chamber 8 and has electric terminals 10, 11 connected to respective conducting metal straps 12, 13 which pass through the partition 6. Said metal straps 12, 13 are in turn connected to an external electric power source, not illustrated in the drawings, by means of a pair of electric wires 14, 15 which pass through the plug 4. A device for controlling the working temperature of the liquid, generally indicated by the reference numeral 16, is accommodated in the upper chamber 7 and is essentially constituted by a bimetallic thermostatic switch which is connected in series between the conducting metal strap 13 and the wire 15. The thermostatic switch 16, of a per se known type, can be constituted by a frame 17, rigidly anchored to the plug 4, which supports a bimetallic strip 18 which has, at one free end, a movable contact 19 which faces a fixed contact 20 rigidly associated with the frame 17.

The strip end 21 which is furthest from the movable contact 19 is connected to the conducting metal strap 13, whereas the fixed contact 20 is rigidly fitted on the contact-holder plate 22, which has a lateral extension 23 to which the wire 15 is welded at 24.

The position and shape of the strip 18 are such that at room temperature the contacts 19 and 20 touch, closing the power supply circuit of the two wires 14 and 15 and energizing the heating element 9. In response to an increase in the temperature of the liquid as a consequence of the emission of heat on the part of the heating element 9, the strip elongates more on the inner side, causing the strip itself to curve, said contacts 19, 20 to separate and the power supply circuit of the heating element 9 to open.

In order to vary the temperature level selected by means of the device 16, there is an adjustment element, generally indicated by 30, which is suitable for selectively varying the mutual distance of the contacts 19, 20 in initial conditions.

The element 30 comprises an oscillating arm 31 to which the end of the strip 18 which is opposite to the one provided with the movable contact 19 is fixed. In particular, the arm 31, which has a generally prismatic shape, has, at the upper end 32, a transverse pivot 33 which is rotatably mounted on the frame 17 by means of lateral supports 34, 35. In order to complete the electric connection of the strip to the heating element 9, an elastic plate 36 is rigidly associated with the metal strap 13 and is anchored at the end of said strip which is fixed to the arm 31. By virtue of its elasticity, the plate 36 also stabilizes the arrangement of the strip in the position set by the adjustment device.

In one embodiment of the invention, actuation means, generally indicated by 40, is coupled to the lower end 37 of the arm 31 and can be actuated from outside the container to rotate the arm 31 step by step corresponding to temperature adjustment intervals.

In particular, the actuation means 40 comprises an elongated element 41 which has an essentially cylindrical shape, is rotatably mounted on the frame 17 and has an internal longitudinal cavity 42. An extension 43 is partially inserted in the cavity 42 and has an annular protrusion 44 which engages with friction in a groove 45 defined in the wall of said cavity 42.

The extension 43 has, at the internal end, a notch 46 which is suitable for accommodating the end of a screwdriver or of an adjustment tool, and has, at the front end, a threaded portion 47 which ends with a bidirectional locking head 48.

Said locking head 48 is inserted in a cavity 49 of the tab 50 of the frame 17, allowing the rotation of the elongated element 41 but not its axial translation.

The threaded portion 47 is engaged in a transverse and complementarily threaded hole 51 defined in a central position of the cylindrical pivot 52. Said pivot is rotatably accommodated in a corresponding snug hole 53 defined at the actuation end of the arm 31.

The elongated element 41 furthermore has, on its cylindrical surface, a double helical groove 54 and, at the end which is furthest from the extension 43, a reduced-diameter cylindrical portion 55. To allow the discontinuous stepwise rotation of the elongated element 41, a first front set of teeth 56 is defined in the transition region of said elongated element and is suitable for interacting with a second front set of teeth 57 defined on a sleeve 58 which is mounted externally to the reduced-diameter portion 55. The sleeve 58 has two radial teeth 59 which engage in longitudinal grooved guides 60 which are rigidly associated with the frame 17, so as to exclusively allow the longitudinal sliding of the sleeve 58 with respect to the elongated element 41. The sleeve 58 is compressed elastically against the elongated element 41, for example by means of a helical spring 61, so as to allow the relative rotation of the crests of the sets of teeth and arrangement in the recesses thereof.

The shaped end 62 of a shaft 63 is inserted within the cavity 42; said shaft has bayonet-like tabs which engage in corresponding sets of teeth defined in the cavity 42, which are not visible in the drawings and are suitable for transmitting the rotation between the shaft 63 and the elongated element 41. A knurled knob 65 is force-fitted, optionally by means of the interposition of a friction O-ring, on the end of the shaft 63 which protrudes from the plug 4, and can be turned by a user.

According to a further embodiment, there is an indicator device 70 for displaying the temperature set with the above described actuation means. In particular, the indicator device comprises an opaque screen 71 which is fixed to the internal wall of the tubular container 2 at the cylindrical element 41 and is provided with one or more series of longitudinally aligned transverse slots 72 which are spaced with a substantially constant pitch.

A slider is mounted outside the elongated element 41 and is formed by a ring 74 which is rotationally locked with respect to said element 41 and has at least one internal raised portion, not illustrated in the drawings, which can engage the helical grooves 54 of the elongated element 41 to translate the ring 74. A protrusion 75 is defined on the outer surface of the ring 74 and has a notch which is colored so as to contrast with that of said screen and forms an indicator which is visible through the slots of said screen. The pitch of the grooves 54 is conveniently set so that each rotation step of the elongated element 41 which is equal to an angular step of the toothed rings 56, 57 corresponds to a longitudinal translatory motion of the ring 74 which is exactly equal to the distance between two successive transverse slots 72. Therefore the protrusion 75 is at all times arranged so as to be visible through one of the transverse slots 72, to the side of which there is a graduated temperature scale, in practice providing a digital type of indication.

According to a further embodiment, the electric heating element 9 is constituted by an insulating support 80; electric power supply paths 81, 82 are silk-screened onto the outer surface of said support 80, and extend along its entire length and are connected to the terminals 10, 11. A resistor component with a non-linear resistive effect, highly temperature-sensitive, is furthermore applied or silk-screened onto the entire support. The fundamental characteristics of this resistor component are a resistivity which varies in a point-by-point manner according to the local temperature and the properties of self-limiting the dissipated power as the temperature varies in an extremely short time.

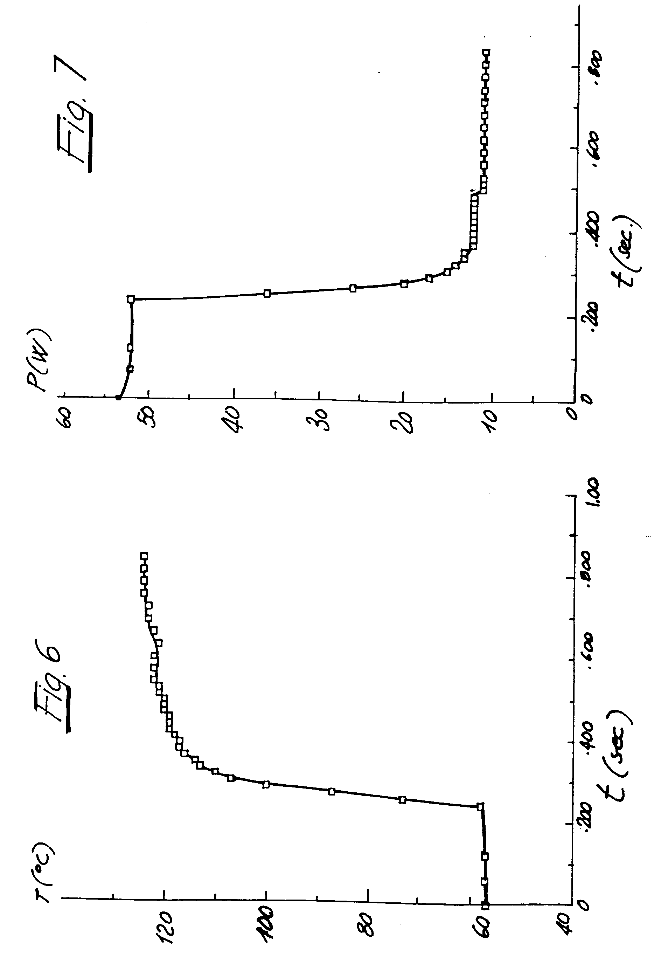

Figures 6 and 7 schematically illustrate some experimental diagrams measured on a specimen of heater according to the invention, which represent the temperature variations in degrees centigrade and the dissipated power variations in watts as a function of time, upon the interruption of heat exchange due to accidental reasons, for example due to an instantaneous lowering of the water level in the aquarium caused by evaporation, leaks, etc. As shown in Figure 6, the maximum temperature stabilizes at around 120°C after less than 5 tenths of a second, whereas the irradiated power drops to values equal to approximately 1/5 of the normal value.

The use of this particular type of resistor allows to keep the insulating support 80 practically rested on the internal wall of the container 2 with no danger of altering the structure of said support and allowing to improve the heat transmission coefficient. For this purpose, the support 80 can be made of materials such as mylar (TM) or kapton (TM), which easily withstand temperatures in the range of 140°C and can be easily reduced to resilient blades or plates. Manufacturing these components, which are already used in other technological fields, is extremely economical and easy and considerably reduces the cost of the heater as a whole.

It is furthermore observed that in case of partial lowering of the level of the liquid to be heated, so that only part of the heater is immersed, the portion of the heating element which protrudes above the water level drastically reduces the emission of heat, whereas the remaining portion operates in normal conditions.

It is apparent that with a heating element of the above described type the risks of breakage of the container 2 are practically eliminated, whereas the efficiency of the entire device is improved. In order to improve the conditions of contact of the heating element with the container 2, it is possible to provide expansion means to be inserted inside the insulating support 80 so as to bring the outer wall of said support into close contact with the internal wall of the container 2.

In operation, in order to select a required temperature level it is sufficient to rotate the knob 65, causing the rotation of the elongated element 41 and of the threaded extension 43. Since said extension cannot slide axially, its rotation causes the movement or oscillation of the arm 30, which in turn changes the angular position of the bimetallic strip 18 and the relative distance of the movable contact 19 with respect to the fixed contact 20. In order to perform the initial setting of the heater it is sufficient to remove the knob 65 and the transmission shaft 63 from the axial cavity 42 of the elongated element 41. At this point, by inserting a screwdriver inside the cavity 42 and acting on the end recess 46 of the extension 43, it is possible to set the initial position of the bimetallic strip 18 as a function of the temperature of the heated liquid, as detected with universal high-precision means. The readout of the preselected temperature level is simplified enormously by virtue of the readout device of a substantially digital type, since the steps of the translatory motion of the indicator 74 and of the colored notch 75 which can be seen through the slots 72 of the opaque screen are equal to the distance between two successive slots 17, thus eliminating any margin of uncertainty in the readout.

In practice it has been observed that the heater according to the invention fully achieves the intended aim and objects, since by virtue of the accuracy in the arrangement of the bimetallic strip, of the digital-type readout precision and of the self-adjusted heat emission of the heating element it allows to provide a device which is highly reliable and has a modest cost. The heater thus conceived is susceptible to numerous modifications and variations, all of which are within the scope of the inventive concept defined by the accompanying claims. All the details may furthermore be replaced with technically equivalent elements. In practice, the materials employed, as well as the dimensions, may be any according to the requirements and to the state of the art.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. Electric immersion heater (1) for liquids, particularly for aquariums, comprising an electric heating element (9) arranged inside a tubular container (2), a pair of electric conductors (12, 14; 13, 15) for connecting said heating element to an external electric power source, a thermostatic switch (16) which is connected in series to one of said conductors and is formed by a frame (17) which supports a fixed contact (20), a bimetallic strip (18) which is sensitive to the temperature of the surrounding medium and a movable contact (19) arranged at the free end of said strip so as to selectively interact with said fixed contact, temperature adjustment means (30) being provided and acting on said strip to vary the relative distance of said contacts; said temperature adjustment means (30) comprising an oscillating arm (31) to which said strip (18) is fixed; actuation means (40) being associated with said oscillating arm and being actuatable from the outside of said container, characterized in that said actuation means (40) comprises a snap-action mechanism (56) which acts on an elongated element (41) to allow its discontinuous step-wise rotation and temporary stopping in steps of preset extent in order to rotate said oscillating arm (31) step by step, whereby each of said steps correspond to minimum temperature adjustment intervals.

2. Heater according to claim 1, characterized in that said snap-action mechanism comprises a first ring (56) with front teeth defined at the end of said elongated element (41) which is adjacent to said transmission shaft (63) and a stop element which interacts with said first ring (56).

3. Heater according to claim 2, characterized in that said stop element consists of a sliding sleeve (58) which is mounted externally to said shaft and has a second ring (57) with front teeth which is arranged opposite to the first one (56), elastic means (61) being provided to force said second ring (57) against said first ring (56).

4. Heater according to claim 1, characterized in that said arm (31) is pivoted to said frame (17) with one of its ends (32), the end portion of said strip (18) which is opposite to said movable contact (19) being fixed to said pivoting end.

5. Heater according to claim 4, characterized in that said actuation means (40) is connected to the actuation end (37) of said arm which is opposite to the pivoting end (32).

6. Heater according to claim 5, characterized in that said actuation means (40) comprises an elongated element (41) which is rotatably mounted on said frame (17) with an axis which is substantially parallel to said strip (18) and is axially locked with respect to said frame (17).

7. Heater according to claim 6, characterized in that said elongated element (41) has, at one of its free ends, connection elements (43) for coupling to the actuation end (37) of said arm (31) which are suitable for converting a rotation of said elongated element (41) into an oscillation of said arm (31).

8. Heater according to claim 7, characterized in that said connection elements (43) comprise a threaded extension (47) which is coaxially associated with said elongated element and a pivot (52) which is associated with said oscillating arm (31) with an axis which is substantially perpendicular to said elongated element (41), said pivot (52) having, in its median portion, a threaded hole (51) which engages with friction with said threaded extension.

9. Heater according to claim 4, characterized in that said actuation means (40) furthermore comprises an actuation knob (65) which can be gripped from the outside of the container and is associated with the end of said elongated element by means of a coaxial transmission shaft (63).

10. Heater according to claim 9, characterized in that said transmission shaft (63) is coupled in a removable manner to said cylindrical element by means of a bayonet coupling (64) which can engage longitudinal sets of teeth defined in said axial cavity (42).

11. Heater according to claim 3, characterized in that it furthermore comprises substantially digital indication means (70) for displaying the temperature set by means of said actuation means (40).

12. Heater according to claim 11, characterized in that said indication means (70) comprises an opaque screen (71) which is fixed to the internal wall of said tubular container (2) at said elongated element (41) and has at least one series of longitudinally aligned transverse slots (72) which are equidistant and associated with minimum temperature intervals.

13. Heater according to claim 12, characterized in that said indication means (70) furthermore comprises one or more helical grooves (54) which are defined on the substantially cylindrical surface of said elongated element (41) and are suitable for actuating a slider (74) which can slide longitudinally with respect to said elongated element.

14. Heater according to claim 13, characterized in that said slider (74) is formed by a sleeve which can slide on said elongated element (41) and is rotationally locked with respect thereto, said sleeve having internal raised portions which can engage said helical grooves (54).

15. Heater according to claim 14, characterized in that said slider (74) has an indicator (75) which is colored so as to contrast with respect to the color of said screen (71) and is arranged in such a position as to face the slots (72) of said screen, the pitch of said grooves (54) being such that each step of rotation of said elongated element (41) corresponds to a unit translatory motion step of said indicator (75) which is equal to the distance between two successive slots (72).

16. Heater according to claim 1, characterized in that said electric heating element (9) is constituted by an electrically insulating element (80), electric power supply paths (81, 82) and a non-linear self-limiting resistive component being silk-screened on the surface of said heating element, said resistive component being highly temperature-sensitive.

17. Heater according to claim 16, characterized in that said insulating support (80) is a plate made of resilient material such as mylar® or kapton®.

18. Heater according to claim 16, characterized in that said insulating support (80) is arranged at least partially in contact with the internal wall of said container (2).

19. Heater according to claim 16, characterized in that said insulating support (80) is constituted by a ceramic element.

## Patentansprüche

1. Elektrische Tauchheizung (1) für Flüssigkeiten, insbesondere für Aquarien, mit einem elektrischen Heizelement (9) innerhalb eines röhrenförmigen Behälters (2), einem Paar elektrischer Leiter (12, 14; 13, 15) zum Verbinden des Heizelementes mit einer externen elektrischen Stromquelle, einem thermostatischen Schalter (16), welcher zu einem der Leiter in Reihe geschaltet und durch einen Rahmen (17) gebildet ist, welcher einen festen Kontakt (20), einen Bi-Metallstreifen (18), welcher auf die Temperatur des umgebendes Mediums reagiert, und einen beweglichen Kontakt (19) trägt, der an dem freien Ende des Streifens zum selektiven Zusammenwirken mit dem festen Kontakt angeordnet ist, wobei eine Temperatureinstellvorrichtung (30) vorgesehen ist, die auf dem Streifen zur Variierung des relativen Abstandes der Kontakte wirkt, und einen Schwingarm (31) umfaßt, an welchem der Streifen (18) befestigt ist, und einer mit dem Schwingarm zusammenwirkenden und von der Außenseite des Behälters betätigbaren Betätigungsvorrichtung (40),
**dadurch gekennzeichnet,**
daß die Betätigungsvorrichtung (40) einen Schnappmechanismus (56) aufweist, welcher auf ein längliches Element (41) wirkt, um dessen diskontinuierliche schrittweise Rotation und zeitweises Stoppen in vorgegebenen Schritten zuläßt, um den Schwingarm (31) schrittweise zu drehen, wobei jeder der Schritte einem minimalen Temperatureinstellintervall entspricht.

2. Heizung nach Anspruch 1, dadurch gekennzeichnet, daß der Schnappmechanismus einen ersten Ring (56) mit stirnrandseitigen Übertragungswelle (63) benachbart ist, sowie ein Anschlagelement, welches mit dem ersten Ring (56) zusammenwirkt.

3. Heizung nach Anspruch 2, dadurch gekennzeichnet, daß das Anschlagelement aus einer Gleithülse (58) besteht, welche außerhalb der Welle befestigt ist und einen zweiten Ring (57) mit stirnkantenseitigen Zähnen aufweist, welcher zum ersten Ring (56) entgegengesetzt angeordnet ist, wobei ein elastisches Element (61) vorgesehen ist, um den zweiten Ring (57) gegen den ersten Ring (56) vorzuspannen.

4. Heizung nach Anspruch 1, dadurch gekennzeichnet, daß der Arm (31) gelenkig am Rahmen (17) mit einem seiner Enden (32) angeordnet ist, wobei der Endbereich des Streifens (18), welches dem beweglichen Kontakt (19) entgegengesetzt ist, an dem schwenkbaren Ende angeordnet ist.

5. Heizung nach Anspruch 4, dadurch gekennzeichnet, daß die Betätigungsvorrichtung (40) an dem Betätigungsende (37) des Armes, welches dem schwenkbaren Ende (32) entgegengesetzt ist, befestigt ist.

6. Heizung nach Anspruch 5, dadurch gekennzeichnet, daß die Betätigungsvorrichtung (40) ein längliches Element (41) umfaßt, welches drehbar am anderen Rahmen (17) mittels einer Achse angeordnet ist, welche im wesentlichen parallel zu dem Streifen (18) verläuft und axial gegenüber dem Rahmen (17) befestigt ist.

7. Heizung nach Anspruch 6, dadurch gekennzeichnet, daß das längliche Element (41) an einem seiner freien Ende Verbindungselemente (43) aufweist, um das Betätigungsende (37) des Arms (31) zur Umwandlung einer Drehbewegung des länglichen Elementes (41) in eine Schwingung des Arms (31) anzukuppeln.

8. Heizung nach Anspruch 7, dadurch gekennzeichnet, daß die Verbindungselemente (43) eine Gewindeverlängerung (47) umfassen, welche koaxial zu dem länglichen Element und einem Gelenk (52) angeordnet ist, welches mit dem Schwingarm (31) mit einer Achse verbunden ist, die im wesentlichen rechtwinklig zu dem länglichen Element (41) ist, wobei das Gelenk (52) in seinem mittleren Bereich eine Gewindebohrung (51) aufweist, die reibschlüssig mit der Gewindeverlängerung zusammenwirkt.

9. Heizung nach Anspruch 4, dadurch gekennzeichnet, daß die Betätigungsvorrichtung (40) weiterhin einen Bestätigungsknopf (65) aufweist, welcher von außerhalb des Behälters erfaßt werden kann und mit dem Ende dem länglichen Elementes mittels einer koaxialen Übertragungswelle (63) zusammenwirkt.

10. Heizung nach Anspruch 9, dadurch gekennzeichnet, daß die Übertragungswelle (63) in lösbarer Weise mit einem elektrischen Element mittels einer Bajonettkupplung (64) verbunden ist, welche in länglichen Sätzen von Zähnen innerhalb einer axialen Ausnehmung (42) eingreifen kann.

11. Heizung nach Anspruch 3, dadurch gekennzeichnet, daß diese weiterhin eine im wesentlichen digitale Anzeigevorrichtung (70) zur Anzeige der mittels der Betätigungsvorrichtung (40) eingestellten Temperatur umfaßt.

12. Heizung nach Anspruch 11, dadurch gekennzeichnet, daß die Anzeigevorrichtung (70) einen dunklen Schirm (71) umfaßt, welcher an einer inneren Wand des röhrenförmigen Behälters (2) an dem länglichen Element (41) befestigt ist und wenigstens eine Reihe von in Längsrichtung ausgerichteten querliegenden Schlitzen (72) aufweist, welche gleich beabstandet und minimalen Temperaturintervallen entsprechend angeordnet sind.

13. Heizung nach Anspruch 12, dadurch gekennzeichnet, daß die Anzeigevorrichtung (70) weiterhin eine oder mehrere spiralförmige Nuten (54) umfaßt, welche auf der im wesentlichen zylindrischen Oberfläche des länglichen Elementes (41) gebildet und zur Betätigung eines Schiebers (74) geeignet sind, welcher in Längsrichtung hinsichtlich des länglichen Elementes verschiebbar ist.

14. Heizung nach Anspruch 13, dadurch gekennzeichnet, daß der Schieber (74) durch eine Öse gebildet ist, welche auf dem länglichen Element (41) verschiebbar und demgegenüber unverdrehbar ist, wobei die Hülse innere Vorsprünge aufweist, welche in die spiralförmigen Nuten (54) eingreifen können.

15. Heizung nach Anspruch 14, dadurch gekennzeichnet, daß der Schieber (74) eine Anzeige (75) umfaßt, welche zur Bildung eines Kontrastes mit Bezug auf die Farbe des Schirms (71) gefärbt und so positioniert ist, daß sie den Schlitzen (72) des Schirms gegenüberliegt, wobei die Steigung der Nuten (54) so ist, daß jeder Schritt einer Drehung des länglichen Elementes (41) einem einheitlichen Längsverschiebungsschritt der Anzeige (75) entspricht, welcher mit dem Abstand zwischen zwei entsprechenden Schlitzen (72) übereinstimmt.

16. Heizung nach Anspruch 1, dadurch gekennzeichnet, daß das elektrische Heizelement (9) durch ein elektrisches Isolationselement (80) elektrische Stromversorgungswege (81, 82) und eine nichtlineare selbstbeschränkende Widerstandskomponente gebildet ist, die im Siebdruckverfahren auf der Oberfläche des Heizelementes ausgebildet ist, wobei die Widerstandskomponente hochtemperaturempfindlich ist.

17. Heizung nach Anspruch 16, dadurch gekennzeichnet, daß das Isolationselement (80) eine Platte aus einem Material wie Mylar® oder Kapton® ist.

18. Heizung nach Anspruch 16, dadurch gekennzeichnet, daß das Isolationselement (80) wenigstens teilweise in Kontakt mit der inneren Wandung des Behälters (2) angeordnet ist.

19. Heizung nach Anspruch 16, dadurch gekennzeichnet, daß die Isolationselement (80) durch ein keramisches Element gebildet ist.

## Revendications

1. Dispositif de chauffage électrique (1) par immersion, pour liquides, en particulier pour aquarium, comportant un élément de chauffage électrique (9) agencé à l'intérieur d'un conteneur tubulaire (2), deux conducteurs électriques (12, 14 ; 13, 15) destinés à relier ledit élément de chauffage à une source extérieure d'alimentation électrique, un commutateur thermostatique (16) qui est relié en série à l'un desdits conducteurs et qui est formé par un châssis (17) qui supporte un contact fixe (20), une lame bimétallique (18) qui est sensible à la température du milieu environnant et un contact mobile (19) agencé au niveau de l'extrémité libre de ladite lame de manière à interagir de manière sélective avec ledit contact fixe, des moyens de réglage de la température (30) étant agencés et agissant sur ladite lame pour faire varier la distance relative desdits contacts, lesdits moyens de réglage de température (30) comportant un bras oscillant (31) sur lequel est fixée ladite lame (18), des moyens d'actionnement (40) étant associés audit bras oscillant et pouvant être actionnés à partir de l'extérieur dudit conteneur, caractérisé en ce que lesdits moyens d'actionnement (40) comportent un mécanisme (56) à action immédiate qui agit sur un élément allongé (41) pour permettre sa mise en rotation par paliers, discontinue, et son arrêt temporaire selon des paliers ayant une amplitude prédéterminée afin de mettre en rotation ledit bras oscillant (31), par paliers, de sorte que chacun desdits paliers correspond à des intervalles minimaux de réglage de température.

2. Dispositif de chauffage selon la revendication 1, caractérisé en ce que ledit mécanisme à action immédiate comporte un premier anneau (56) ayant des dents avant définies au niveau de l'extrémité dudit élément allongé (41) qui est adjacente audit arbre de transmission (63) et un élément de butée qui interagit avec ledit premier anneau (56).

3. Dispositif de chauffage selon la revendication 2, caractérisé en ce que ledit élément de butée est constitué d'un manchon coulissant (58) qui est monté extérieurement par rapport audit arbre et a un second anneau (57) ayant des dents avant qui est agencé à l'opposé du premier anneau (56), des moyens élastiques (61) étant agencés pour appuyer en force ledit second anneau (57) contre ledit premier anneau (56).

4. Dispositif de chauffage selon la revendication 1, caractérisé en ce que ledit bras (31) est monté pivotant sur ledit châssis (17) par l'intermédiaire d'une première de ses extrémités (32), la partie d'extrémité de ladite lame (18) qui est opposée audit contact mobile (19) étant fixée sur ladite extrémité pivotante.

5. Dispositif de chauffage selon la revendication 4, caractérisé en ce que lesdits moyens d'actionnement (40) sont reliés à l'extrémité d'actionnement (37) dudit bras qui est opposée à l'extrémité de pivotement (32).

6. Dispositif de chauffage selon la revendication 5, caractérisé en ce que lesdits moyens d'actionnement (40) comportent un élément allongé (41) qui est monté de manière rotative sur ledit châssis (17), en ayant un axe qui est pratiquement parallèle à ladite lame (18) et qui est verrouillée axialement par rapport audit châssis (17).

7. Dispositif de chauffage selon la revendication 6, caractérisé en ce que ledit élément allongé (41) comporte, au niveau d'une de ses extrémités libres, des éléments de connexion (43) destinés à être reliés à l'extrémité d'actionnement (37) dudit bras (31), qui sont adaptés pour convertir une rotation dudit élément allongé (41) en une oscillation dudit bras (31).

8. Dispositif de chauffage selon la revendication 7, caractérisé en ce que lesdits éléments de connexion (43) comportent un prolongement fileté (47) qui est associé coaxialement audit élément allongé et un pivot (52) qui est associé audit bras oscillant (31) ayant un axe qui est pratiquement perpendiculaire audit élément allongé (41), ledit pivot (52) ayant, dans sa partie médiane, un trou taraudé (51) qui vient en prise avec friction avec ledit prolongement fileté.

9. Dispositif de chauffage selon la revendication 4, caractérisé en ce que lesdits moyens d'actionnement (40) comportent en outre un bouton d'actionnement (65) qui peut être saisi à partir de l'extérieur du conteneur et qui est associé à l'extrémité dudit élément allongé par l'intermédiaire d'un arbre de transmission coaxial (63).

10. Dispositif de chauffage selon la revendication 9, caractérisé en ce que ledit arbre de transmission (63) est relié d'une manière amovible audit élément cylindrique par l'intermédiaire d'un accouplement à baïonnette (64) qui peut mettre en prise des ensembles longitudinaux de dents définis dans ladite cavité axiale (42).

11. Dispositif de chauffage selon la revendication 3, caractérisé en ce qu'il comporte en outre des moyens d'indication essentiellement numériques (70) pour afficher la température établie par l'intermédiaire desdits moyens d'actionnement (40).

12. Dispositif de chauffage selon la revendication 11, caractérisé en ce que lesdits moyens d'indication (70) comportent un écran opaque (71) qui est fixé sur la paroi intérieure dudit conteneur tubulaire (2) au niveau dudit élément allongé (41) et comporte au moins une série de fentes transversales longitudinalement alignées (72) qui sont équidistantes et associées à des intervalles minimaux de température.

13. Dispositif de chauffage selon la revendication 12, caractérisé en ce que lesdits moyens d'indication (70) comportent en outre une ou plusieurs gorges hélicoïdales (54) qui sont définies à la surface pratiquement cylindrique dudit élément allongé (41) et sont adaptées pour actionner un coulisseau (74) qui peut coulisser longitudinalement par rapport audit élément allongé.

14. Dispositif de chauffage selon la revendication 13, caractérisé en ce que ledit coulisseau (74) est formé d'un manchon qui peut coulisser sur ledit élément allongé (41) et qui est verrouillé en rotation par rapport à celui-ci, ledit manchon ayant des parties intérieures en relief qui peuvent venir en prise dans lesdites gorges hélicoïdales (54).

15. Dispositif de chauffage selon la revendication 14, caractérisé en ce que ledit coulisseau (74) comporte un indicateur (75) qui est coloré de manière à contraster par rapport à la couleur dudit écran (71) et qui est agencé dans une position telle qu'il soit en vis à vis des fentes (72) dudit écran, le pas desdites gorges (54) étant tel que chaque palier de rotation dudit élément allongé (41) correspond à un palier unitaire de déplacement en translation dudit indicateur (75) qui est égal à la distance existant entre deux fentes successives (72).

16. Dispositif de chauffage selon la revendication 1, caractérisé en ce que ledit élément de chauffage électrique (9) est constitué d'un élément électriquement isolant (80), de trajets d'alimentation électrique (81, 82) est d'un composant résistif non-linéaire, se limitant automatiquement, muni d'un écran à mailles sur la surface dudit élément de chauffage, ledit constituant résistif étant très sensible à la température.

17. Dispositif se chauffage selon la revendication 16, caractérisé en ce que ledit support isolant (80) est une plaque constituée de matériau élastique tel que mylar ou kapton (noms commerciaux déposés).

18. Dispositif de chauffage selon la revendication 16, caractérisé en ce que ledit support isolant (80) est agencé au mois partiellement en contact avec la paroi intérieure dudit conteneur (2).

19. Dispositif de chauffage selon la revendication 16, caractérisé en ce que ledit support isolant (80) est constitué d'un élément en céramique.
